# EUROPÄISCHE PATENTSCHRIFT

(11) **EP 3 540 212 B1**
(45) Veröffentlichungstag und Bekanntmachung des Hinweises auf die Patenterteilung: **07.10.2020**
(21) Anmeldenummer: 18162377.8
(22) Anmeldetag: 16.03.2018
(51) Int. Cl.: F03D 1/06

(54) **ANBAUTEIL FÜR EIN WINDENERGIEANLAGENROTORBLATT**
ATTACHMENT FOR A WIND ENERGY ASSEMBLY ROTOR BLADE
PIÈCE RAPPORTÉE POUR UNE LAME DE ROTOR D'UNE ÉOLIENNE

(43) Veröffentlichungstag der Anmeldung: 18.09.2019
(73) Patentinhaber: Nordex Energy GmbH, 22419 Hamburg (DE)
(72) Erfinder: Haspel, Benedikt, 18055 Rostock (DE); Ehrich, Kai, 18146 Rostock (DE)
(74) Vertreter: Hauck Patentanwaltspartnerschaft mbB

(56) Entgegenhaltungen:
- EP-A1- 2 631 467
- CN-A- 105 484 946
- US-A1- 2011 142 635
- US-A1- 2011 142 637
- US-B1- 7 909 576

## Beschreibung

Die Erfindung betrifft ein Anbauteil für ein Windenergieanlagenrotorblatt, das mindestens ein aerodynamisch wirksames Element und ein streifenförmiges Befestigungselement zum Aufkleben auf eine aerodynamische Fläche des Windenergieanlagenrotorblatts aufweist.

Aerodynamisch wirksame Anbauteile werden eingesetzt, um die das Windenergieanlagenrotorblatt im Betrieb umgebende Luftströmung gezielt zu beeinflussen. Beispielsweise können Vortex-Generatoren an einer Saugseite des Windenergieanlagenrotorblatts befestigt werden, um eine turbulente Grenzschicht zu erzeugen, die vorzeitigen Strömungsablösungen bei großen Blattanstellwinkeln entgegenwirkt. Ebenfalls bekannt sind Anbauteile, die einer Geräuschentwicklung entgegenwirken sollen, beispielsweise an der Profilendkante angeordnete Bürsten oder Zähne.

Zur Befestigung werden die Anbauteile mit einer aerodynamischen Fläche des Windenergieanlagenrotorblatts verklebt. Diese Verklebung wird stark beansprucht und ist jahrelang Wind und Wetter ausgesetzt. Besondere Schwierigkeiten bereiten die im Betrieb des Windenergieanlagenrotorblatts auftretenden Verformungen des Rotorblatts. Insbesondere bei großen Anbauteilen führen die Verformungen zu starken Spannungen in der Klebeschicht. Gleichzeitig ist es zur Vereinfachung der Montage häufig sinnvoll, mehrere aerodynamisch wirksame Elemente in einem entsprechend größeren Anbauteil zusammenzufassen - beispielsweise drei oder mehr Vortex-Generatoren, die in einer Reihe angeordnet werden sollen. Sie können mit Hilfe eines gemeinsamen, streifenförmigen Befestigungselements aufgeklebt werden, sodass nicht jeder Vortex-Generator einzeln exakt positioniert werden muss. Nachteilig ist jedoch die hierfür vorgesehene, großflächige Verklebung, die wegen der unter Verformung auftretenden Spannungen versagen kann. Es wurde beobachtet, dass sich derartige Befestigungselemente mit der Zeit von der Oberfläche lösen und schließlich abfallen.

Aus der Druckschrift WO 2017/148669 A1 ist ein Anbauteil mit einem streifenförmigen Befestigungselement und mehreren Zähnen bekannt geworden. Mehrere dieser Anbauteile sind entlang einer Profilendkante aneinandergereiht, so dass die Zähne in Strömungsrichtung hinter der Profilendkante angeordnet sind. Die streifenförmigen Befestigungselemente weisen jeweils eine Klebefläche auf. An den Kerbgründen zwischen den Zähnen sind viertelkreisförmige Entlastungsschlitze vorgesehen, die einem Ermüdungsbruch im Bereich der Kerbgründe entgegenwirken sollen.

Dokumente DE102011052930 A1 und US 2011/142637 A1 zeigen ein Anbauteil mit einem streifenförmigen Befestigungselement und mehreren Zähnen bekannt geworden. Das streifenförmige Befestigungselement ist durch Schlitze in mehrere Befestigungsabschnitte, die jeweils eine Klebefläche aufweisen, unterteilt. Ebenfalls beschrieben sind Bohrungen in den Befestigungsabschnitten für eine Befestigung mit mechanischen Verbindungselementen. Die Schlitze sollen die Flexibilität des Anbauteils erhöhen und die darin auftretenden Spannungen verringern.

Davon ausgehend ist es die Aufgabe der Erfindung, ein Anbauteil für ein Windenergieanlagenrotorblatt zur Verfügung zu stellen, das besonders einfach und zuverlässig befestigt werden kann.

Diese Aufgabe wird gelöst durch das Anbauteil mit den Merkmalen des Anspruchs 1. Vorteilhafte Ausgestaltungen sind in den sich anschließenden Unteransprüchen angegeben.

Das Anbauteil für ein Windenergieanlagenrotorblatt hat mindestens ein aerodynamisch wirksames Element und ein streifenförmiges Befestigungselement zum Aufkleben auf eine aerodynamische Fläche des Windenergieanlagenrotorblatts, wobei das streifenförmige Befestigungselement in mehrere Befestigungsabschnitte unterteilt ist, die jeweils eine Klebefläche aufweisen, und zwei benachbarte Befestigungsabschnitte über ein elastisches, zwischen diesen Befestigungsabschnitten angeordnetes Dehnungselement miteinander verbunden sind.

Das Anbauteil kann mehrere aerodynamisch wirksame Elemente aufweisen, die zum Beispiel in einer Reihe und in Abständen voneinander angeordnet sein können, insbesondere entlang einer Längsrichtung des streifenförmigen Befestigungselements. Jedem Befestigungsabschnitt kann genau ein aerodynamisch wirksames Element zugeordnet sein. Es ist jedoch ebenso möglich, dass sich mehrere aerodynamisch wirksame Elemente einen Befestigungsabschnitt teilen oder dass mehrere Befestigungsabschnitte einem aerodynamisch wirksamen Element zugeordnet sind. Die Befestigungsabschnitte können entlang einer Längsrichtung des streifenförmigen Befestigungselements aneinandergereiht sein.

Die aerodynamische Fläche des Windenergieanlagenrotorblatts ist im Betrieb des Windenergieanlagenrotorblatts einer umgebenden Luftströmung ausgesetzt. Die aerodynamische Fläche des Windenergieanlagenrotorblatts kann insbesondere eine Druckseite oder eine Saugseite des Windenergieanlagenrotorblatts sein. Im Bereich der aerodynamischen Fläche kann das Windenergieanlagenrotorblatt ein aerodynamisches Profil aufweisen. Die aerodynamische Fläche kann jedoch auch in einem Bereich angeordnet sein, in dem das Windenergieanlagenrotorblatt einen geringen oder keinen Auftrieb erzeugt und einen beispielsweise kreisrunden oder annähernd kreisrunden Querschnitt aufweist, zum Beispiel nahe einer Blattwurzel.

Bei der Erfindung ist das streifenförmige Befestigungselement wie dasjenige aus der Druckschrift DE 10 2011 052 930 A1 in mehrere Befestigungsabschnitte unterteilt. Mindestens zwei der Befestigungsabschnitte sind über ein elastisches Dehnungselement miteinander verbunden. Diese Verbindung kann unter Verwendung einer entsprechenden Anzahl von Dehnungselementen insbesondere zwischen jedem Paar benachbarter Befestigungsabschnitte vorgesehen sein.

Das Dehnungselement ist elastisch, wobei die Elastizität in den Eigenschaften der für das Dehnungselement verwendeten Materialien bzw. des für das Dehnungselement verwendeten Materials begründet sein kann. Alternativ oder zusätzlich kann die Elastizität des Dehnungselements durch die Geometrie des Dehnungselements begründet sein.

Das Dehnungselement kann insbesondere die einzige Verbindung zwischen den benachbarten Befestigungsabschnitten sein. In diesem Fall könnten die benachbarten Befestigungsabschnitte somit voneinander entfernt werden, wenn das Dehnungselement nicht vorhanden wäre. Möglich ist jedoch auch, dass zwischen benachbarten Befestigungsabschnitten eine zusätzliche, mittelbare Verbindung besteht, beispielsweise über ein aerodynamisch wirksames Element, das mit jedem der beiden benachbarten Befestigungsabschnitte verbunden ist. Das Dehnungselement kann räumlich zwischen den benachbarten Befestigungsabschnitten angeordnet sein. Es kann eine unmittelbare Verbindung zwischen den benachbarten Befestigungsabschnitten bilden.

In jedem Fall ermöglicht die Verbindung zwischen den benachbarten Befestigungsabschnitten durch das elastische Verbindungselement eine Übertragung von Kräften zwischen den Befestigungsabschnitten. Die Erfinder haben erkannt, dass bei den aus dem genannten Stand der Technik bekannten, vollständig voneinander getrennten Befestigungsabschnitten trotz der verbesserten Flexibilität des Befestigungselements Spannungskonzentrationen an den Rändern der einzelnen Befestigungsabschnitte auftreten, die unter Dauerbeanspruchung zu einer von dort ausgehenden Ablösung der Befestigungsabschnitte von dem Windenergieanlagenrotorblatt führen können. Das elastische Dehnungselement kann diese Spannungskonzentrationen mindern und dadurch die Ablösung einzelner Befestigungsabschnitte verhindern.

In einer Ausgestaltung übt das Dehnungselement bei einer Änderung des Abstands zwischen den benachbarten Befestigungsabschnitten eine Kraft auf die Befestigungsabschnitte aus, die der Abstandsänderung entgegenwirkt. Diese Kraft wird bei einer Vergrößerung des Abstands ebenso wirksam, wie bei einer Verkleinerung des Abstands. Stellt man sich das Dehnungselement als elastische Feder vor, bedeutet dies, dass es sich in einer entspannten Stellung befindet, wenn das Anbauteil in einem Grundzustand ist, indem es auf die aerodynamische Fläche des Windenergieanlagenrotorblatts aufgeklebt wird. Das Dehnungselement wirkt dann spannungsmindernd auf die Befestigungsabschnitte ein, wenn das Windenergieanlagenrotorblatt einer Biegebelastung ausgesetzt ist, gleich in welcher Richtung.

In einer Ausgestaltung erstreckt sich das Dehnungselement nur über einen Teil einer Breite der Klebeflächen, wobei die Breite der Klebeflächen quer zu einer Längsrichtung des streifenförmigen Befestigungselements angeordnet ist. Die Klebeflächen können in Breitenrichtung insbesondere zu beiden Seiten über das Dehnungselement überstehen. Das Dehnungselement ist dann vollständig von den Klebeflächen umschlossen. Dadurch kann das Risiko einer Ablösung unter Umständen weiter verringert werden.

In einer Ausgestaltung weisen die benachbarten Befestigungsabschnitte zwei in einem Abstand voneinander angeordnete Ränder auf, von denen das Dehnungselement ausgeht. Die beiden Ränder können parallel zueinander angeordnet sein. Sie können einander gegenüberliegen, aber auch versetzt zueinander angeordnet sein, insbesondere quer zu einer Längsrichtung des streifenförmigen Befestigungselements. Das Dehnungselement geht von den beiden Rändern aus und überbrückt den Abstand dazwischen. Die von dem Dehnungselement ausgeübten Kräfte wirken unmittelbar auf die beiden Ränder ein, sodass sie den dort auftretenden Spannungskonzentrationen entgegenwirken.

In einer Ausgestaltung ist das Dehnungselement innerhalb eines Rechtecks angeordnet, das die beiden Klebeflächen der benachbarten Befestigungsabschnitte umschließt. Bei dieser Anordnung können seitliche Kanten der Klebeflächen zwei Parallelseiten des gedachten Rechtecks bilden. Die Klebeflächen können sich in Längsrichtung des streifenförmigen Befestigungselements jeweils über die gesamte Länge des betreffenden Befestigungsabschnitts erstrecken, also jeweils bis an zwei voneinander beabstandete Enden des Befestigungsabschnitts heranreichen. Das Dehnungselement wird in dieser Ausgestaltung zwischen den von einer Ablösung besonders gefährdeten Rändern der Klebeflächen wirksam.

In einer Ausgestaltung sind die Befestigungsabschnitte und das Dehnungselement einteilig gefertigt. Beispielsweise können die beiden Elemente gemeinsam in einem Spritzgießverfahren gefertigt werden, sowohl unter Verwendung eines einzigen Kunststoffmaterials als auch unter Verwendung zweier unterschiedlicher Kunststoffmaterialien. Gegebenenfalls kann das mindestens eine aerodynamisch wirksame Element im selben Herstellungsschritt gefertigt werden.

Bei der Erfindung bestehen die Befestigungsabschnitte und das Dehnungselement aus einem flachen Materialstreifen, wobei das Dehnungselement von jedem der beiden benachbarten Befestigungsabschnitte durch einen Schlitz in dem Materialstreifen getrennt ist. In einem an den Schlitz angrenzenden Bereich bleibt eine Brücke oder ein Steg stehen, die bzw. der einen Übergang zwischen dem Dehnungselement und dem jeweiligen benachbarten Befestigungsabschnitt bildet. Die Schlitze können zum Beispiel etwa orthogonal zur Längsrichtung des Befestigungselements angeordnet sein, aber auch schräg dazu, so dass sie beispielweise einen Winkel im Bereich von 0° bis 45° mit der Orthogonalen einschließen.

Bei der Erfindung gehen die Schlitze jeweils von einer Längskante des Materialstreifens, der das streifenförmige Befestigungselement bildet, aus und enden an einem Endpunkt innerhalb des Materialstreifens. Insbesondere können die beiden Schlitze voneinander gegenüberliegenden Längskanten des streifenförmigen Befestigungselements ausgehen. Das um die beiden Schlitze herum verbleibende Material kann zum Beispiel eine S- oder Z-Form bilden. Durch diese Formgebung wird eine hohe Elastizität des Dehnungselements erreicht. Mindestens einer der Schlitze kann an dem Endpunkt eine Erweiterung aufweist. Im Bereich der Erweiterung ist eine Breite des Schlitzes vergrößert. Insbesondere kann die Erweiterung abgerundet sein, zum Beispiel kreisförmig. Die Erweiterung wirkt einer Rissbildung am Ende des Schlitzes entgegen.

In einer Ausgestaltung verlaufen die Schlitze in gleichmäßigem Abstand voneinander. Sind die Schlitze geradlinig, verlaufen die Schlitze also parallel und das Verbindungselement hat die Form eines Streifens mit gleichmäßiger Breite.

In einer Ausgestaltung weisen die Schlitze eine Krümmung auf. Beispielsweise können die beiden Schlitze derart geschwungen verlaufen, dass das Verbindungselement insgesamt S-förmig ist. Auch durch diese Formgebung wird eine hohe Elastizität erreicht.

In einer Ausgestaltung weist eine zwischen den Schlitzen verlaufenden Mittellinie des Dehnungselements eine Länge auf, die größer ist als ein Abstand zwischen den Schlitzen. Das Dehnungselement erstreckt sich also im Vergleich zu seiner Breite über eine große Länge. Beispielweise kann der Abstand zwischen den Endpunkten größer sein als der Abstand zwischen den beiden Schlitzen.

In einer Ausgestaltung ist das aerodynamisch wirksame Element ein Vortex-Generator. Vortex-Generatoren, auch als Wirbelerzeuger bezeichnet, führen zur Ausbildung einer turbulenten Grenzschicht. Sie weisen hierzu mindestens eine schräg zu einer Strömungsrichtung angeordnete Finne auf, die sich von der aerodynamischen Fläche des Windenergieanlagenrotorblatts weg erstreckt. Eine Höhe der Finne kann in etwa einer Grenzschichtdicke der Strömung entsprechen. Insbesondere kann der Vortex-Generator zwei benachbart angeordnete Finnen aufweisen.

In einer Ausgestaltung ist das Anbauteil zur Befestigung an einer Profilendkante des Windenergieanlagenrotorblatts bestimmt und das aerodynamisch wirksame Element ist ein Zahn, der nach hinten über die Profilendkante übersteht. Insbesondere kann das Anbauteil mehrere entlang einer Längsrichtung des Befestigungselements, d. h. im mit dem Windenergieanlagenrotorblatt verklebten Zustand entlang der Profilendkante, aneinandergereihte Zähne aufweisen.

In einer Ausgestaltung richtet sich die Erfindung auf ein Windenergieanlagenrotorblatt mit einem Anbauteil nach einem der Ansprüche 1 bis 11, das auf eine aerodynamische Fläche des Windenergieanlagenrotorblatts aufgeklebt ist.

Nachfolgend wird die Erfindung anhand von in Figuren dargestellten Ausführungsbeispielen näher erläutert. Es zeigen:
- Fig. 1: einen Ausschnitt eines Windenergieanlagenrotorblatts mit einem daran befestigten Anbauteil in einer schematischen Darstellung,
- Fig. 2: einen Ausschnitt eines Anbauteils in einer Draufsicht,
- Fig. 3: einen Ausschnitt eines anderen Anbauteils in einer Draufsicht,
- Fig. 4: einen Ausschnitt noch eines anderen Anbauteils in einer Draufsicht,
- Fig. 5: einen Ausschnitt eines weiteren Anbauteils in einer Draufsicht,

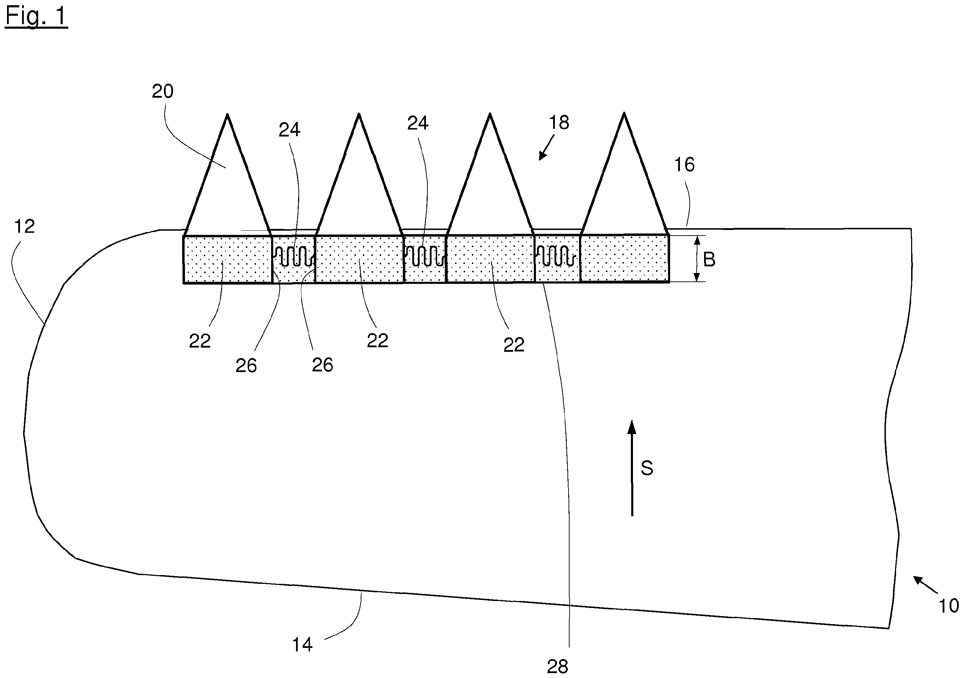

Das Windenergieanlagenrotorblatt 10 aus Fig. 1 hat eine Blattspitze 12, eine Profilnasenkante 14 und eine Profilendkante 16. Entlang der Profilendkante 16 ist ein Anbauteil 18 angeordnet, das ein streifenförmiges Befestigungselement 28 und als aerodynamisch wirksame Elemente Zähne 20 aufweist, die in einer Längsrichtung des Anbauteils 18 aneinandergereiht sind und in Strömungsrichtung S nach hinten über die Profilendkante 16 überstehen.

Die Zähne 20 haben jeweils die Form eines gleichschenkligen Dreiecks mit einer nach hinten weisenden Spitze und einer nahe der Profilendkante 16 angeordneten Basis. An diese Basis schließt sich das streifenförmige Befestigungselement 28 an, welches eine Vielzahl rechteckiger Befestigungsabschnitte 22 aufweist. Dabei ist jedem Zahn 20 ein Befestigungsabschnitt 22 zugeordnet. Jeder Befestigungsabschnitt 22 hat an seiner Unterseite eine ebenfalls rechteckige Klebefläche, die mit der dem Betrachter zugewandten aerodynamischen Fläche des Windenergieanlagenrotorblatts 10, bei der sich um eine Saugseite des Windenergieanlagenrotorblatts 10 handelt, verklebt ist.

Zwischen jedem Paar benachbart angeordneter Befestigungsabschnitte 22 ist ein elastisches Dehnungselement 24 angeordnet, dass in der Fig. 1 durch eine Schlangenlinie dargestellt ist. Das Dehnungselement 24 verbindet zwei einander gegenüberliegend angeordnete Ränder 26 der benachbarten Befestigungsabschnitte 22. Wie durch die sechs Punkte veranschaulicht, kann eine beliebige Anzahl an Befestigungsabschnitten 22 aneinandergereiht sein.

Insgesamt bilden die Befestigungsabschnitte 22 das streifenförmige Befestigungselement 28. Es ist entlang einer streifenförmigen Fläche mit der aerodynamischen Fläche des Windenergieanlagenrotorblatts 10 verklebt. Man erkennt, dass die Dehnungselemente 24 jeweils eine quer zur Längsrichtung des Befestigungselements betrachtete Breite aufweisen, die kleiner ist als die Breite B der Klebeflächen, deren Breite der Breite des streifenförmigen Befestigungselements 28 entspricht.

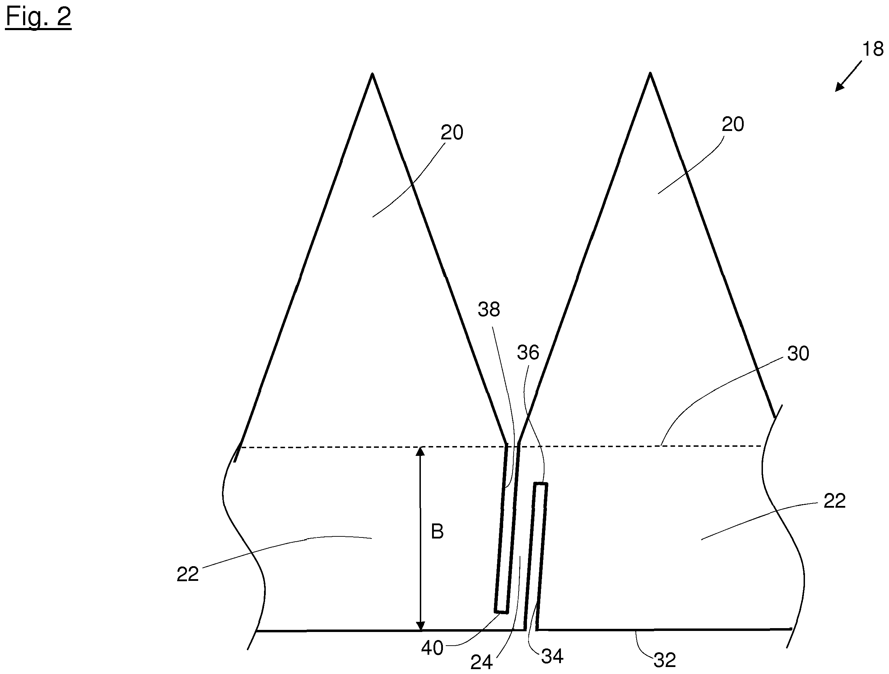

Figur 2 zeigt einen Ausschnitt eines anderen Anbauteils 18, das aus einem flachen Materialstreifen besteht. Der gezeigte Ausschnitt umfasst zwei Zähne 20. Die Zähne 20 gehen an der gestrichelten Linie jeweils in einen Befestigungsabschnitt 22 über. Die Befestigungsabschnitte 22 gehören zu dem streifenförmigen Befestigungselement 28, das zwei Längskanten aufweist. Eine Längskante 30 verläuft entlang der gestrichelten Linie, die andere Längskante 32 parallel dazu an einem von den Zähnen 20 abgewandten Ende der Befestigungsabschnitte 22.

Die beiden benachbarten Befestigungsabschnitte 22 sind jeweils durch einen Schlitz von einem dazwischen angeordneten Dehnungselement 24 getrennt. Das Dehnungselement 24 ist ebenfalls von dem flachen Materialstreifen gebildet und weist aufgrund seiner Geometrie eine Elastizität auf.

Der Schlitz 34 beginnt an der Längskante 32 und erstreckt sich von dort geradlinig etwa in Breitenrichtung des streifenförmigen Befestigungselements bis zu einem Endpunkt 36. Der Schlitz 38 verläuft ausgehend von der Längskante 30 ebenfalls geradlinig und parallel zu dem Schlitz 34 bis zu einem Endpunkt 40. Die beiden Endpunkte 36, 40 sind innerhalb des streifenförmigen Befestigungselements 28 angeordnet. Am Ausgangspunkt des Schlitzes 38 grenzen die beiden Zähne 20 aneinander an. Im Bereich der Endpunkte 36, 40 der Schlitze 34 bzw. 38 geht das Dehnungselement 24 nahtlos in die angrenzenden Befestigungsabschnitte 22 über.

An einer Unterseite der Befestigungsabschnitte 22 ist eine nicht dargestellte Klebefläche vorhanden, deren Breite B etwa von der Längskante 30 bist zur Längskante 32 reicht.

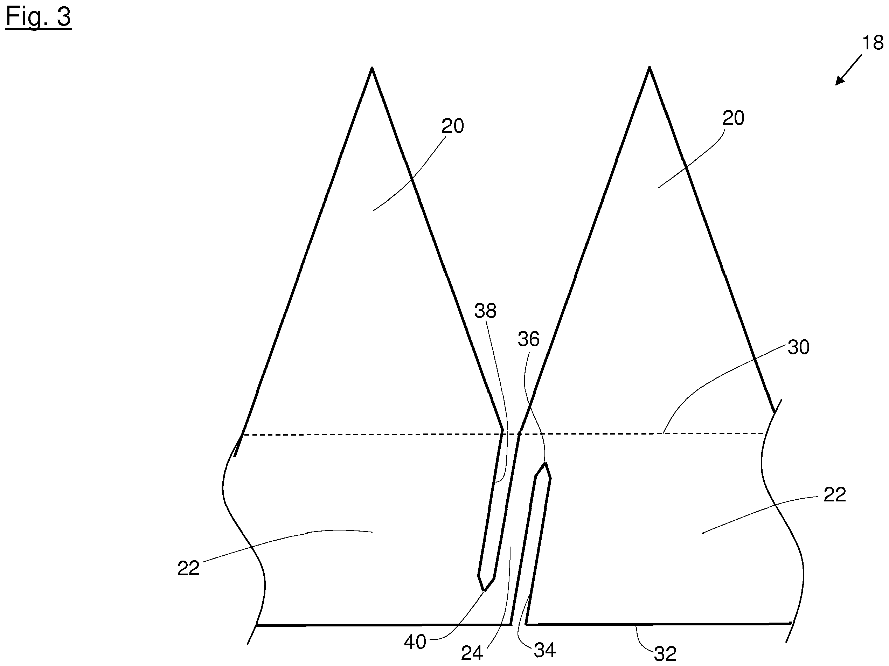

Figur 3 zeigt ein anderes Anbauteil 18, dass weitgehend demjenigen der Fig. 2 entspricht und mit denselben Bezugszeichen gekennzeichnet ist, die nicht erneut erläutert werden. Einziger Unterschied ist, dass die Schlitze 34, 38 an ihren Endpunkten 36 bzw. 40 nicht wie in Fig. 2 stumpf, d. h. an einer quer zu ihrer Längsrichtung ausgerichteten Kante enden, sondern spitz auslaufen.

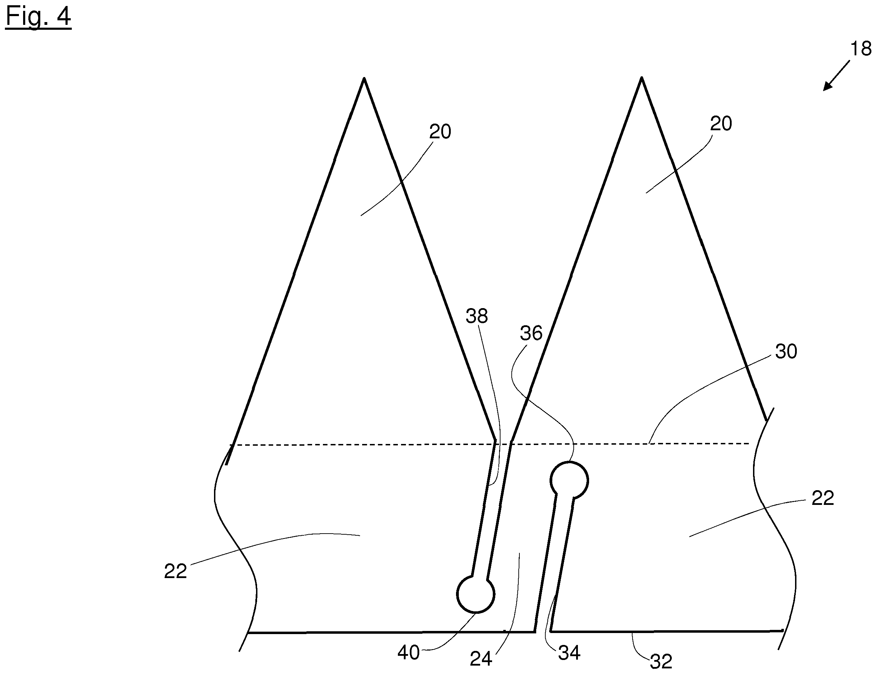

Das Anbauteil 18 aus Fig. 4 unterscheidet sich von denjenigen aus den Figuren 2 und 3 ebenfalls durch die Geometrie der Schlitze 34, 38 an ihren Endpunkten 36 bzw. 40. Dort weisen die Schlitze 34, 38 jeweils eine kreisförmige Erweiterung auf. Außerdem verlaufen die Schlitze 34, 38 bei dem Anbauteil 18 aus Fig. 4 in einem größeren Abstand voneinander, sodass das Dehnungselement 24 eine größere Breite aufweist.

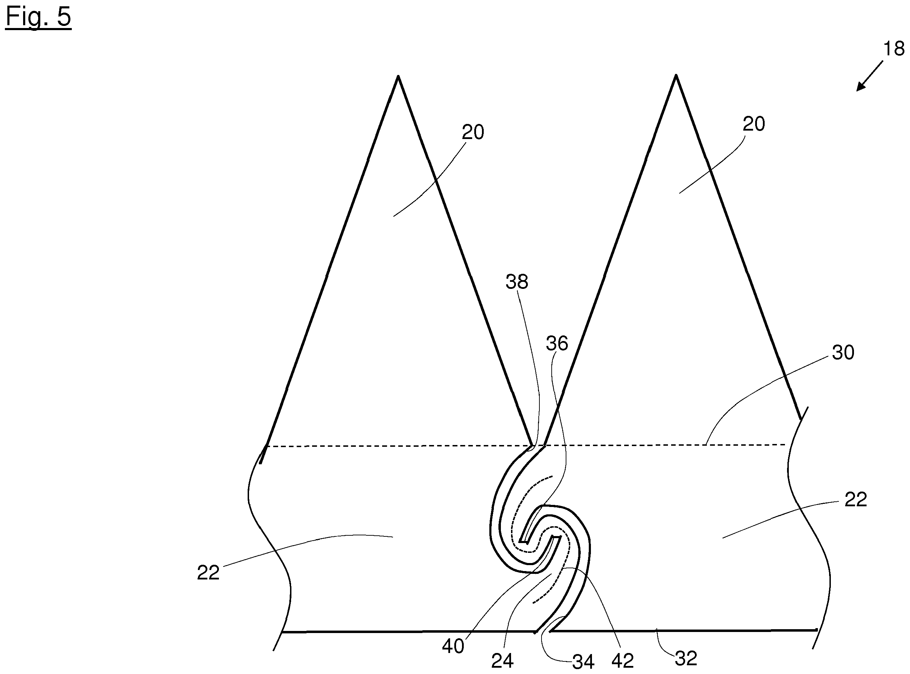

Figur 5 zeigt ein weiteres Beispiel eines Anbauteils 18, bei dem die beiden Schlitze 34, 38 gekrümmt verlaufen. Das zwischen den beiden Schlitzen 34, 38 angeordnete Dehnungselement 24 weist eine S-Form auf. Die punktiert eingezeichnete Mittellinie 42 des Dehnungselements 24 ist ebenfalls S-förmig. Sie weist eine große Länge auf, die insbesondere größer ist als ein Abstand zwischen den Schlitzen 34, 38.

### Liste der Bezugszeichen:

- 10: Windenergieanlagenrotorblatt
- 12: Blattspitze
- 14: Profilnasenkante
- 16: Profilendkante
- 18: Anbauteil
- 20: Zahn
- 22: Befestigungsabschnitt
- 24: Dehnungselement
- 26: Rand
- 28: streifenförmiges Befestigungselement
- 30: Längskante
- 32: Längskante
- 34: Schlitz
- 36: Endpunkt
- 38: Schlitz
- 40: Endpunkt
- 42: Mittellinie
- B: Breite

## Patentansprüche

1. Anbauteil (18) für ein Windenergieanlagenrotorblatt (10), wobei das Anbauteil (18) mindestens ein aerodynamisch wirksames Element (20) und ein streifenförmiges Befestigungselement (28) zum Aufkleben auf eine aerodynamische Fläche des Windenergieanlagenrotorblatts (10) aufweist, wobei das streifenförmige Befestigungselement (28) in mehrere Befestigungsabschnitte (22) unterteilt ist, die jeweils eine Klebefläche aufweisen, wobei zwei benachbarte Befestigungsabschnitte (22) über ein elastisches, Dehnungselement (24) miteinander verbunden sind und die Befestigungsabschnitte (22) und das Dehnungselement (24) aus einem flachen Materialstreifen bestehen und einteilig gefertigt sind, **dadurch gekennzeichnet, dass** das Dehnungselement (24) zwischen den beiden benachbarten Befestigungsabschnitten (22) angeordnet ist und von jedem der beiden benachbarten Befestigungsabschnitte (22) durch einen Schlitz (34, 38) in dem Materialstreifen getrennt ist und die Schlitze (34, 38) jeweils von einer Längskante (30, 32) des Materialstreifens ausgehen und an einem Endpunkt (36, 40) innerhalb des Materialstreifens enden.

2. Anbauteil (18) nach Anspruch 1, **dadurch gekennzeichnet, dass** das Dehnungselement (24) bei einer Änderung des Abstands zwischen den benachbarten Befestigungsabschnitten (22) eine Kraft auf die Befestigungsabschnitte (22) ausübt, die der Abstandsänderung entgegenwirkt.

3. Anbauteil (18) nach Anspruch 1 oder 2, **dadurch gekennzeichnet, dass** sich das Dehnungselement (24) nur über einen Teil einer Breite B der Klebeflächen erstreckt, wobei die Breite B der Klebeflächen quer zu einer Längsrichtung des streifenförmigen Befestigungselements angeordnet ist.

4. Anbauteil (18) nach einem der Ansprüche 1 bis 3, **dadurch gekennzeichnet, dass** die benachbarten Befestigungsabschnitte (22) zwei in einem Abstand voneinander angeordnete Ränder (26) aufweisen, von denen das Dehnungselement (24) ausgeht.

5. Anbauteil (18) nach einem der Ansprüche 1 bis 4, **dadurch gekennzeichnet, dass** das Dehnungselement (24) innerhalb eines Rechtecks angeordnet ist, das die beiden Klebeflächen der benachbarten Befestigungsabschnitte (22) umschließt.

6. Anbauteil (18) nach einem der Ansprüche 1 bis 5, **dadurch gekennzeichnet, dass** die Schlitze (34, 38) in gleichmäßigem Abstand voneinander verlaufen.

7. Anbauteil (18) nach einem der Ansprüche 1 bis 6, **dadurch gekennzeichnet, dass** die Schlitze (34, 38) eine Krümmung aufweisen.

8. Anbauteil (18) nach einem der Ansprüche 1 bis 7, **dadurch gekennzeichnet, dass** eine zwischen den Schlitzen (34, 38) verlaufenden Mittellinie (42) des Dehnungselements (24) eine Länge aufweist, die größer ist als ein Abstand zwischen den Schlitzen (34, 38).

9. Anbauteil (18) nach einem der Ansprüche 1 bis 8, **dadurch gekennzeichnet, dass** das aerodynamisch wirksame Element ein Vortex-Generator ist.

10. Anbauteil (18) nach einem der Ansprüche 1 bis 8, **dadurch gekennzeichnet, dass** das Anbauteil (18) zur Befestigung an einer Profilendkante (16) des Windenergieanlagenrotorblatts (10) bestimmt und das aerodynamisch wirksame Element ein Zahn (20) ist, der nach hinten über die Profilendkante (16) übersteht.

11. Windenergieanlagenrotorblatt (10) mit einem Anbauteil (18) nach einem der Ansprüche 1 bis 10, das auf eine aerodynamische Fläche des Windenergieanlagenrotorblatts (10) aufgeklebt ist.

## Claims

1. Attachment (18) for a wind turbine rotor blade (10), the attachment (18) comprising at least one aerodynamically active element (20) and a strip-shaped fastening element (28) for adhering onto an aerodynamic surface of the wind turbine rotor blade (10), the strip-shaped fastening element (28) being subdivided into a plurality of fastening sections (22), each of which has an adhesive surface, two adjacent fastening sections (22) being connected to one another by means of an elastic expansion element (24), the fastening sections (22) and the expansion element (24) consisting of a flat strip of material and being manufactured in one piece, **characterized in that** the expansion element (24) is arranged between the two adjacent fastening sections (22) and is separated from each of the two adjacent fastening sections (22) by a slit (34, 38) in the strip of material, and the slits (34, 38) each originating from a longitudinal edge (30, 32) of the strip of material and terminating at an end point (36, 40) inside the strip of material.

2. Attachment (18) according to claim 1, **characterized in that** the expansion element (24) exerts a force on the fastening sections (22) when the distance between the adjacent fastening sections (22) changes, which force counteracts the change in distance.

3. Attachment (18) according to claim 1 or 2, **characterized in that** the expansion element (24) extends only over part of a width B of the adhesive surfaces, wherein the width B of the adhesive surfaces is arranged transversely to a longitudinal direction of the strip-shaped fastening element.

4. Attachment (18) according to one of claims 1 to 3, **characterized in that** the adjacent fastening sections (22) comprise two edges (26) arranged at a distance from one another, from which the expansion element (24) extends.

5. Attachment (18) according to one of claims 1 to 4, **characterized in that** the expansion element (24) is arranged within a rectangle, which encloses the two adhesive surfaces of the adjacent fastening sections (22).

6. Attachment (18) according to one of claims 1 to 5, **characterized in that** the slits (34, 38) extend at a uniform distance from one another.

7. Attachment (18) according to one of claims 1 to 6, **characterized in that** the slits (34, 38) exhibit a curvature.

8. Attachment (18) according to one of claims 1 to 7, **characterized in that** a center line (42) of the expansion element (24) extending between the slits (34, 38) exhibits a length which is larger than a distance between the slits (34, 38).

9. Attachment (18) according to any one of claims 1 to 8, **characterized in that** the aerodynamically effective element is a vortex generator.

10. Attachment (18) according to one of claims 1 to 8, **characterized in that** the attachment (18) is intended for fastening to a profile trailing edge (16) of the wind turbine rotor blade (10) and the aerodynamically active element is a tooth (20) which projects backwards beyond the profile trailing edge (16).

11. Wind turbine rotor blade (10) comprising an attachment (18) according to any one of claims 1 to 10, which is adhered to an aerodynamic surface of the wind turbine rotor blade (10).

## Revendications

1. Pièce rapportée (18) pour une lame de rotor d'éolienne (10), la pièce rapportée (18) présentant au moins un élément actif aérodynamique (20) et un élément de fixation en forme de bande (28) destiné à être collé sur une surface aérodynamique de la lame de rotor d'éolienne (10), dans laquelle l'élément de fixation en forme de bande (28) est divisé en plusieurs sections de fixation (22) présentant respectivement une surface de collage, dans laquelle deux sections de fixation (22) voisines sont reliées entre elles par un élément extensible élastique (24), et les sections de fixation (22) et l'élément extensible (24) sont constitués d'une bande de matériau plane et fabriqués d'un seul tenant, **caractérisée en ce que** l'élément extensible (24) est disposé entre les deux sections de fixation (22) voisines et séparé de chacune des deux sections de fixation (22) voisines par une fente (34, 38) dans la bande de matériau, et les fentes (34, 38) partent respectivement d'une arête longitudinale (30, 32) de la bande de matériau et se terminent en un point final (36, 40) à l'intérieur de la bande de matériau.

2. Pièce rapportée (18) selon la revendication 1, **caractérisée en ce que** lors d'une modification de la distance entre les sections de fixation (22) voisines, l'élément extensible (24) exerce une force sur les sections de fixation (22), laquelle agit contre la modification de distance.

3. Pièce rapportée (18) selon la revendication 1 ou 2, **caractérisée en ce que** l'élément extensible (24) s'étend uniquement sur une partie d'une largeur B des surfaces de collage, la largeur B des surfaces de collage étant disposée perpendiculairement à une direction longitudinale de l'élément de fixation en forme de bande.

4. Pièce rapportée (18) selon l'une des revendications 1 à 3, **caractérisée en ce que** les sections de fixation (22) voisines présentent deux bords (26) disposés à une distance l'un de l'autre, d'où part l'élément extensible (24).

5. Pièce rapportée (18) selon l'une des revendications 1 à 4, **caractérisée en ce que** l'élément extensible (24) est disposé à l'intérieur d'un rectangle renfermant les deux surfaces de collage des sections de fixation (22) voisines.

6. Pièce rapportée (18) selon l'une des revendications 1 à 5, **caractérisée en ce que** les fentes (34, 38) s'étendent à une distance régulière l'une de l'autre.

7. Pièce rapportée (18) selon l'une des revendications 1 à 6, **caractérisée en ce que** les fentes (34, 38) présentent une courbure.

8. Pièce rapportée (18) selon l'une des revendications 1 à 7, **caractérisée en ce qu'**une ligne médiane (42) de l'élément extensible (24) s'étendant entre les fentes (34, 38) présente une longueur supérieure à une distance entre les fentes (34, 38).

9. Pièce rapportée (18) selon l'une des revendications 1 à 8, **caractérisée en ce que** l'élément actif aérodynamique est un générateur de vortex.

10. Pièce rapportée (18) selon l'une des revendications 1 à 8, **caractérisée en ce que** la pièce rapportée (18) est destinée à être fixée à une arête finale de profilé (16) de la lame de rotor d'éolienne (10) et l'élément actif aérodynamique est une dent (20) faisant saillie vers l'arrière au-delà de l'arête finale de profilé (16).

11. Lame de rotor d'éolienne (10) comprenant une pièce rapportée (18) selon l'une des revendications 1 à 10, laquelle est collée sur une surface aérodynamique de la lame de rotor d'éolienne (10).
